Europäisches Patentamt

European Patent Office

Office européen des brevets

(19)

(11) Publication number: **0 412 590 A1**

## EUROPEAN PATENT APPLICATION

(12)

(21) Application number: 90201829.0

(51) Int. Cl.⁵: **A23J 1/20, A23J 3/08**

(22) Date of filing: 09.07.90

| | |
|---|---|
| The title of the invention has been amended (Guidelines for Examination in the EPO, A-III, 7.3). | (71) Applicant: **UNILEVER NV**<br>**Burgemeester s'Jacobplein 1 P.O. Box 760**<br>**NL-3000 DK Rotterdam(NL)** |
| (30) Priority: **10.08.89 GB 8918276**<br>**04.01.90 EP 90200018** | (84) **BE** |
| | Applicant: **UNILEVER PLC**<br>**Unilever House Blackfriars P.O. Box 68** |
| (43) Date of publication of application:<br>**13.02.91 Bulletin 91/07** | **London EC4P 4BQ(GB)** |
| | (84) **AT** |
| (84) Designated Contracting States:<br>**AT BE CH DE DK ES FR GB GR IT LI NL SE** | (72) Inventor: **Hakkaart, Marcellinus Jacobus**<br>**Surinamelaan 18**<br>**NL-1213 VN Hilversum(NL)**<br>Inventor: **Kunst, Anthonie**<br>**Weegbree 41**<br>**D-1273 AN Huizen(NL)**<br>Inventor: **Leclercq, Edith**<br>**de Vecht 26**<br>**D-3448 CM Woerden(NL)** |
| | (74) Representative: **Mulder, Cornelis Willem Reinier, Dr. et al**<br>**UNILEVER N.V. Patent Division P.O. Box 137**<br>**NL-3130 AC Vlaardingen(NL)** |

(54) **Edible compositions of denatured whey proteins.**

(57) Compositions, enriched in denatured alpha-lactalbumin are obtained by a process for denaturing these lactalbumins and separating these from the undenatured protein. These compositions can be used as fat replacer in food compositions.

EP 0 412 590 A1

## EDIBLE COMPOSITION

The present invention is concerned with a process for the preparation of a food composition comprising colloidal particles of denatured protein with a fatty mouthfeel impression, with aqueous compositions comprising such compositions, with dry compositions obtainable by drying such aqueous compositions, and with food products and topical compositions, containing these compositions.

In European patent application 0 250 623 an aqueous dispersion is described comprising colloidal non-aggregated particles of denatured whey protein coagulate with mean diameter particle size distribution when dry ranging from about 0.1 to about 2.0 microns. The dispersions are prepared by heating an aqueous concentrate of undenatured whey protein at heat denaturing temperatures from about 80°C to 130°C, in an aqueous solution under very high shear conditions at pH below the isoelectric point. In European patent application 0 323 529 a similar process is described, starting from other types of protein than whey protein.

A comparable edible product comprising an aqueous macrocolloidal dispersion can be obtained without the necessity of subjecting the aqueous protein solution to high shear condition, by a process comprising successively heating (60 - 80°C) and concentrating (European patent application 088201237).

We have now found that when the alpha-lactalbumins, present in protein compositions are denatured selectively and are separated from the other protein present, a product enriched in alpha-lactalbumin is obtained, that possesses an excellent fatty mouthfeel. In literature various processes are described for separating and isolating various whey protein fractions, mainly alpha-lactalbumin and beta-globulin. De Wit, J.N., Klarenbeek, G. & Adamse, M. (Neth. Milk Dairy J., 40, no. 1, pp. 41-56 (1986) have compared various processes for isolating whey proteins. Among them are membrane processes such as ultrafiltration and diafiltration, ionic exchange processes based on resins from Sphérosil or Vistec, and whey desalting and desugaring processes as used by lactose manufacturers. Other processes for separating and isolating whey proteins are heat treatment (65°C) at pH 4.1-4.3 for several minutes (Pearce, R.J., Austr. J. Dairy Technol., vol. 38, pp. 144-148 (1983); precipitation of beta-lactoglobulin at pH 4.65 (Slack, A.W., Amundson, C.H. & Hill, C.G., J. Food Proc. Preserv., vol. 10, pp 19-30 (1986); salting out of alpha-lactalbumin at low pH (Mailliart, P. & Ribadeau-Dumas, B., J. Food Sci., vol 54, 743-745, 752 (1988).

All processes mentioned above are fractionating whey proteins for functionality and nutritional purposes. Especially beta-lactoglobulin is referred to as having emulsifying and whipping properties, and is mostly used in fortified diet specialty products, whereas alpha-lactalbumin constitute a waste.

The present invention describes the isolation of an enriched fraction of denatured alpha-lactalbumin via heat treatment at neutral pH according to European patent application 088201237, which has after heat treatment excellent fatty mouthfeel, and has a consistency similar to spreads, and can replace fat in emulsion type food and cosmetic products, like ice cream, dressing, cheese, spread, cream, lotion, when applied as wet fraction, and can act as emulsifier in food and cosmetic products when applied as protein powder.

Normally cheese whey consists for about 19-21% of alpha- lactalbumin, and for about 51-54% of β-lactoglobulin so the weight ratio between these two varies from 0.35 to 0.41.

HPLC pictures of the protein of the obtained edible composition, and of the solution of undenatured protein, show that in the edible protein composition obtained after separation the weight ratio α-lactalbumin to β-lactoglobuline based upon the protein present in the whey is increased. Therefore according to the invention a fractionation of whey proteins in a denatured alpha-lactalbumin enriched fraction (sludge) and a undenatured beta-lactoglobulin enriched fraction is obtained.

Thus the invention concerns with a process for the preparation of a food composition, the process comprising successively heating and concentrating an aqueous composition comprising less than 15% by weight of the water, of heat denaturable protein at least partly consisting of whey protein, to at least partly denature said protein and increase preferably with more than 100% the concentration of the denatured protein in the aqueous composition and removing at least part of the remaining undenatured protein present, to provide a composition of at least 5 wt.% of heat denatured protein in the form of non-aggregated microcolloidal particles having a mean size in the range of 0.1 to 10 microns, in particular 3.0-5.0 um, in which the alpha-lactalbumin content and the β-lactoglobulin content, based upon the protein present in the whey are such that the weight-ratio of α-lactalbumin to β-lactoglobuline is more than 0.43.

In a preferred embodiment the removal of undenatured protein is carried out in such a way that the weight ratio of denatured alpha-lactalbumin to β-lactoglobulin in the composition based upon the protein present in the whey is 0.55 - 4.0.

In the present process the heat-denaturable protein applied, is preferably selected from the group of proteins consisting of sweet or acid whey, whey protein concentrate, ultrafiltered whey protein (delactosed, desalted), whey protein powder, waste fraction enriched in alpha-lactalbumin from Sphérosil process (optionally ultrafiltered), alpha-lactalbumin enriched fraction obtained after salting out at low pH according to the process of Mailliart & Ribadeau-Dumas, and milk (optionally ultrafiltered).

Preferably the aqueous composition used is an alpha-lactalbumin enriched fraction, optionally delactosed. Although in the present process the aqueous composition, prior to the heat treatment may contain as much as 15%, by weight of the water, of heat denaturable protein, it is preferred to apply a protein content of less than 8 wt.% and more than 0.5 wt.% of heat denaturable protein. If relatively low concentration levels are applied the final products appear to have very smooth but less fatty characteristics.

The process of claim 1 can be executed in two different ways, depending on the critical gel concentration of the protein in the aqueous composition. If the protein concentration is below the critical gel concentration (i.e. below 8%) the temperature in the heating step is 60-80°C, whereas no shear of more than 500 reciprocal seconds is used during heating of the composition.

In a preferred embodiment of the present process the aqueous composition is heated in the heating step for a period from 1 to 30 minutes to a temperature of 60°C-75°C. Although it may be desirable to stir the aqueous composition, no benefits are obtained from subjecting said composition to high shear. Thus in this embodiment the aqueous composition, during heat treatment, is subjected to less shear than 500, preferably less than 200 reciprocal seconds.

It was found that during this mild process no off-flavours are generated. The development of such off-flavours is undesirable if the present process is used for the preparation of ingredients for food products or farmaceuticals or cosmetic products.

Preferably higher heating temperatures are combined with shorter heating times. Best results are obtained if the aqueous composition is heated less than 1 hour, more particularly from 1 minute to a maximum of 30 minutes, preferably less, within the temperature range 60°C to 75°C.

If however the protein concentration in the aqueous composition is above the critical gel concentration shear must be used during the heating. This way it is possible to obtain a similar protein composition, when the heating step is carried out according to UHT treatment. The concentration of the aqueous composition in the UHT like process has to be then at least 8 wt.%, The temperature range that can be used is then 90 to 150°C, preferably 105 to 145°C, in which higher heating temperatures are combined with shorter heating times. Best results are obtained if the aqueous composition is heated less than 30 seconds, preferably from 1 second to a maximum of 25 seconds, within the temperature range of 90 to 145°C. During this UHT-like heat treatment the aqueous protein solution is subjected to shear, at least of 500 reciprocal seconds, more preferably at least 1000 reciprocal seconds.

After the heat treatment the aqueous composition may suitable be concentrated by the application of any concentrating technique known in the art. Examples of such techniques are: ultrafiltration, ion exchange, electrodialysis, microfiltration, or more preferably centrifugation. The suitability of these techniques depend on the ingredients present in the aqueous composition and on the desired degree of concentration in addition to effectiveness in removing undenatured whey protein.

The concentrating step in the present process is required to remove undenatured protein and attain the desired consistency. The more the aqueous composition is concentrated, i.e. the water content reduced, the more firm the concentrated product becomes. Thus, in practice, the degree of concentrating required merely depends on the consistency desired. Since, however, the present process is particularly suitable for producing compositions having a fatty impression, and a spreadable consistency, it is preferred to concentrate the aqueous composition to a protein content of at least 7 wt.%, more preferably to a protein content of between 8 and 30 wt.%.

The concentrating step in the present process may be facilitated by using techniques to enhance precipitation of the protein, for example, acidifying the aqueous composition, preferably prior to concentrating. Acidification is preferably in the pH range from 4 to 7. Instead of acidification alternative techniques such as addition of certain cations may be used to facilitate the concentrating step.

The aqueous composition may alternatively be dried, for example by freeze drying or spray drying. This drying step is possible before as well as after the concentrating step. However, the concentrated product has to be diluted with water or a carbohydrate solution when spraydried because of the high viscosity of the concentrated product. Mono- as well as di- and oligosaccharides, most preferably lactose or saccarose, may be used as filling material during spraydrying in a concentration ratio protein: carbohydrate up to 1 : 20, preferably 1 : 1. The ratio between protein and carbohydrate during freezing and freeze drying is the same. Addition of a carbohydrate during drying of protein composition gives a stable powder, and a good reconstitutable and rehydratable product with the same characteristics as the original, not dried protein composition.

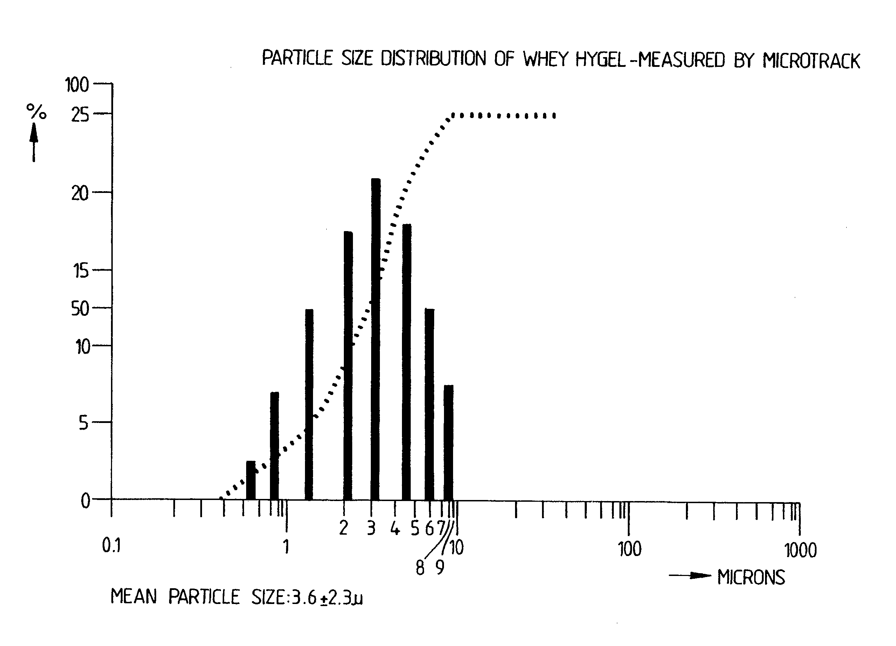

The composition obtained by means of the present process comprises protein-based particles having a mean size, as determined by a Microtrac Small Particle Analyzer (Tradename) in the range of 0.1 to 10 microns. If the diameter of the particles becomes rather large, deficiencies such as graininess and imperfection of fatty mouthfeel are observed. In figure 1 the particle size distribution of a composition, according to the invention, is illustrated.

The fatty mouthfeel of the present protein composition may be improved by addition of emulsifiers, stabilizers, and thickeners, during the preparation of the said protein composition. Addition of the above mentioned compounds may occur before the heating step, after the heating step, before acidification, after acidification, or mixed with the already prepared protein composition. Most preferably the emulsifiers, stabilizers or thickeners are added to the protein solution prior to heating. As additives may be used all types of emulsifiers, most preferably emulsifiers with rather low HLB-value, e.g. HLB-value not above 10, most preferably HLB-value lower than 8. Examples of emulsifiers are Spans (sorbitan esters), mono- and diglycerides, lecithin and egg yolk. Concentration of emulsifier used may be up to 5.0 wt.%, preferably 0.1-0.3 wt.%. Thus the weight ratio of protein to emulsifier may be above 1:1, preferably in the range of 50:1 to 15:1.

Examples of stabilizers and thickeners are starch (optionally modified), gums, gelatin, pectin, cellulose (optionally modified), casein. Concentration of the stabilizers and thickeners used may be up to 10.0 wt.%, preferably 0.5-3.0%. The weight ratio of protein to stabilizer or thickener may be up to 1:2, preferably in the range of 10:1 to 2:1.

The wet products of the invention exhibit good microbiological stability and if stored with a preservative, e.g. potassium sorbate at 5°C for over three months without significant deterioration. Addition of a preservative seems not always necessary since protein composition may be pasteurized, optionally prior to concentration.

The dried product may be stored at room temperature, with or without a preservative e.g. potassium sorbate, for at least one year without significant deterioration. They can be used to provide a low calorie food product or cosmetic product. This way margarine, dressing, cheese, yogurt, ice cream, mayonnaise, dairy and non-dairy creams can be made. The products may also be incorporated in creams and other products for topical application to the body, for example in cosmetics, optionally in combination with an acceptable support material, for example a fat-based cream, for obtaining a low-fat edible cosmetic cream.

The present invention is illustrated by the following examples:

Example 1

1 litre of 5% aqueous solution (pH 7.2) of Bipro (R-Tradename) undenatured whey protein powder (ex. Bioisolates PLC, Swansea, UK), was partly denatured by heating 10 minutes at 65°C. A milk like stable, colloidal dispersion was thus obtained. The colloidal dispersion was acidified to pH 4.8 during cooling with 20 wt.% citric acid solution, and concentrated by centrifuge at 3000 rpm after which a spreadable mass, containing about 12 wt.% of mainly alpha-lactalbumin and 88 wt.% of water with undenatured protein was obtained.

HPLC pictures of the protein solution before heating, of the obtained edible composition, and of the solution of undenatured protein, show that about 75 wt.% of denatured alpha-lactalbumin is present in the edible protein composition, thus this process is fractionating whey proteins in a alpha-lactalbumin enriched fraction (sludge) and a beta-lactoglobulin enriched fraction, undenatured in solution.

The distribution of the diameter of the protein-based particles in the dispersion was measured by means of a Microtrac (Tradename) Small Particle Analyzer. For this size-analysis 0,5 g of denatured protein product were suspended in 30 ml. ethanol. After sonication for at least 1 h, until all protein is suspended, the measurement was carried out by adding 10 ml ethanolic suspension to the vessel of the Microtrac. Most particles appeared to have a diameter in the range from 1 to 9 microns (see figure 1), whereas the mean particle size was 3.6 um.

Example 2

Experiment 1 was repeated except that an alpha-albumin enriched fraction, obtained from ion exchange process with Sphérosil QMA resin (ex. Rhone-Poulenc Fine Chemicals, Paris, France) was used as protein raw material. After ultrafiltration to 5 wt.% protein solution the heating step was conducted.

The product obtained resembled the product obtained in example 1.

Example 3

Experiment 1 was repeated with the alpha-lactalbumin enriched fraction obtained from a salting out process at low pH according to Mailliart & Ribadeau-Dumas. The obtained alpha-lactalbumin fraction was suspended at pH 7 at 5 wt.% concentration. This solution was processed according to example 1. A salt tasting protein composition was obtained with similar smooth, fatty character as the protein composition without salt.

Example 4

1 litre of 5% aqueous solution (pH 7.2) of Bipro (R-Tradename) undenatured whey protein powder (ex. Bioisolates, PLC, Swansea, UK) was partly denatured by heating 10 minutes at 65°C. Prior to heating lecithin (0.3 wt.%, ex Quest International) was added to the solution.
After heating a milk like stable, colloidal dispersion was obtained.
The colloidal dispersion was acidified to pH 4.8 during cooling with 20 wt.% citric acid solution, and concentrated by centrifuge at 3000 rpm after which a spreadable mass, containing about 12 wt.% of mainly alpha-lactalbumin and lecithin, and 88 wt.% of water with undenatured protein was obtained. This edible protein composition had an improved fatty mouthfeel over the protein composition without lecithin.

Example 5

Experiment 4 was repeated with mono-/diglycerides as added emulsifier prior to heating (Hymono 1103, ex. Quest International). The thus obtained edible plastic protein composition had improved fatty characteristics compared to the protein composition without mono-/diglycerides.

Example 6

The edible composition was freezed and freeze dried with saccharose as stabilizing agent. The protein composition was mixed with saccharose (protein: saccharose = 1:1) prior to freezing and freeze drying. Thus obtained freeze dried powder (water content 1%) could be reconstituted with water to an edible plastic protein composition with similar fatty mouthfeel as had the original, not freezed and freeze dried protein composition.

Example 7

The edible composition was spraydried (nozzle, atomizer) without any additives, and with lactose as stabilizing agent (protein: lactose = 1:1). A spray dried powder (water content 5%) was obtained, which could be reconstituted to an edible protein composition with similar smooth and fatty character as had the original, not spray dried protein composition.

Example 8

A 100 kilogram batch of a mayonnaise-like product was prepared in accordance with the practice of the present invention by admixing the following ingredients:

EP 0 412 590 A1

| Edible protein composition | 45.0 (percent by weight) |
|---|---|
| Vegetable oil | 35.0 |
| Sugar | 5.0 |
| Food grade acid mixture | 4.5 |
| Salt | 1.5 |
| Egg yolk | 3.0 |
| Stabilizing blend | 0.35 |
| Water | 6.65 |

Example 9

A 100 kilogram zero percent fat ice cream-like product was prepared with a continuous ice-cream apparatus by admixing the following ingredients:

| Edible protein composition | 19.0 (percent by weight) |
|---|---|
| Skim milk powder | 10.0 |
| Sugars | 14.0 |
| Dextrose | 4.0 |
| Stabilizer blend | 0.1 |
| Egg yolk | 1.0 |
| Water | 51.9 |

Example 10

A low fat all purpose cream was prepared from the following ingredients:

| Edible protein composition powder | 2.0 (percent by weight) |
|---|---|
| Glyceryl stearate | 5.0 |
| Polysorbate 80 | 1.0 |
| Glycerin | 19.0 |
| Lanolin anhydrous | 1.0 |
| Liquid paraffin | 18.0 |
| Avocado oil | 2.0 |
| Sodium borate | 1.0 |
| Methyl p-hydroxybenzoate | 0.1 |
| Propylene glycol | 0.9 |
| Deionzied water | 49.5 |
| Perfume composition | 0.5 |

**Claims**

1. Process for the preparation of a food composition, the process comprising successively heating and concentrating an aqueous composition comprising less than 15% by weight of the water, of heat denaturable protein at least partly consisting of whey protein, to at least partly denature said protein and increase the concentration of the denatured protein in the aqueous composition and removing at least part of the remaining undenatured protein present, to provide a composition of at least 5 wt.% of heat denatured protein in the form of non-aggregated microcolloidal particles having a mean size in the range of 0.1 to 10 microns, in which the alpha-lactalbumin content and the $\beta$-lactoglobulin content, based upon the protein present in the whey are such that the weight ratio of $\alpha$-lactalbumin to $\beta$-lactoglobuline is more than 0.43.

2. Process according to claim 1 wherein the removal of undenatured protein is carried out in such a way that the weight ratio of alpha-lactalbumin to $\beta$-lactoglobulin in the composition, based upon the protein present in the whey, is 0.55 - 4.0.

3. Process according to claim 1 or 2 wherein the concentration of total protein in the aqueous composition is below the critical gel concentration.

4. Process according to claim 1 to 3 wherein the aqueous denatured protein composition is concentrated to a protein content of at least 7%.

5. Process according to claim 1 to 4 wherein the aqueous composition is heated to a temperature between $60°$ and $80°$ C.

6. Process according to claim 5 wherein the aqueous protein composition is heated for a period from 1 to 30 minutes within the temperature range 60 to $75°$ C.

7. Process according to any of the preceding claims wherein during heating the aqueous composition is subjected to less than 500 reciprocal seconds of shear.

8. Process according to claim 1 wherein the concentration of total protein in the aqueous composition is above the critical gel concentration, and is subjected to shear during a UHT heat treatment.

9. Process according to claim 8 wherein the concentration of total protein in the aqueous composition is at least 8 wt.%

10. Process according to claim 8 wherein the aqueous composition is heated between 90 and $150°$ C and the composition is subjected to shear of at least 500 reciprocal seconds.

11. Process according to claim 10, wherein the aqueous composition is heated between 105 and $145°$ C under a shear of at least $1000 \text{ s}^{-1}$.

12. Process according to any of the preceding claims wherein the aqueous denatured protein composition is mixed with carbohydrate and subsequently subjected to freezing and freeze drying.

13. Process according to claim 12 wherein said carbohydrate is a monosaccharide or disaccharide.

14. Process according to claim 1 to 11 wherein the aqueous denatured protein composition is spraydried with a nozzle spraydrier or atomizer, optionally mixed with carbohydrate prior to spraydrying.

15. Process according to claim 14 wherein said carbohydrate is a monosaccharide or disaccharide.

16. Process according to claim 12 to 15 wherein carbohydrate is added to the aqueous protein composition in a concentration ratio protein : carbohydrate up to 1:20.

17. Process according to claim 1 wherein an emulsifier a thickener and/or a stabilizer is added to the aqueous protein solution prior to heating in a concentration of up to 5.0 wt.%

18. Process according to claim 17 wherein said emulsifier has a HLB-value less than 10 and is derived from the group of sorbitan esters, mono-/diglycerides, lecithin, or egg yolk.

19. Process according to any of the preceding claims wherein the aqueous composition is acidified to a pH in the range 4 to 7 after the heating step and before the concentration step.

20. Process according to any of the preceding claims wherein the heat-denaturable protein is selected from the group of proteins consisting of sweet or acid whey, whey protein concentrate, ultrafiltered whey protein (delactosed, desalted), whey protein powder, waste fraction enriched in alpha-lactalbumin from Sphérosil process (optionally ultrafiltered), alpha-lactalbumin enriched fraction obtained after salting out at low pH according to the process of Mailliart & Ribadeau-Dumas, and milk (optionally ultrafiltered).

21. A composition comprising a dispersion of denatured protein particles containing denatured alpha-lactalbumin and $\beta$-lactoglobulin particles wherein the weight ratio $\alpha$-lactalbumin to $\beta$-lactoglobulin is at least 0.43 and having a mean size in the range of 0.1 to 10 microns.

22. Dry composition of denatured protein particles, wherein the weight ratio of denatured alpha-lactalbumin to $\beta$-lactoglobulin is more than 0.43, preferably 0.55 - 4.0 and having a mean size of 0.1 to 10 microns.

23. Dry composition according to claim 22 which contains less than 15 wt% water.

24. Food products containing a food composition prepared as claimed in claim 1 to 11, or a dried food composition obtained according to the claims 12 to 15, or the dispersion according to claim 21 or the dry compositions of claims 22 and 23.

25. Topical composition suitable for application to the body and comprising a food composition prepared as claimed in claim 1 to 11, or a dried food composition obtained according to the claims 12 to 15 or the dispersion according to claim 21 or the dry compositions of claims 22 and 23, in combination with an acceptable support material.

PARTICLE SIZE DISTRIBUTION OF WHEY HYGEL -MEASURED BY MICROTRACK

MEAN PARTICLE SIZE: 3.6±2.3μ

EP 0 412 590 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | EP-A-0 250 623 (JOHN LABATT LTD) <br> * Page 12, line 25 - page 13, line 4; page 15, line 38; page 16, lines 1-17; examples; claims * | 1-25 | A 23 J 1/20 <br> A 23 J 3/08 |
| X | WO-A-8 808 673 (COMMONWEALTH SCIENTIFIC IND. RES. ORG.) <br> * Abstract; pages 3-6 * | 1-6 | |
| A | EP-A-0 129 346 (LAND O'LAKES INC.) <br> * Page 6, lines 12-20; page 8, lines 9-18 * | 1-25 | |
| A | EP-A-0 209 414 (LAITERIES E. BRIDEL) <br> * Pages 6-7 * | 1-6 | |
| P,X | EP-A-0 347 237 (UNILEVER) <br> * Whole document * | 1-25 | |

TECHNICAL FIELDS SEARCHED (Int. Cl.5)

A 23 J

The present search report has been drawn up for all claims

| Place of search | Date of completion of the search | Examiner |
|---|---|---|
| THE HAGUE | 21-08-1990 | ALVAREZ Y ALVAREZ C. |

EPO FORM 1503 03.82 (P0401)